(19)

Europäisches
Patentamt
European
Patent Office
Office européen
des brevets

(11)     **EP 3 258 684 A1**

(12)     **EUROPEAN PATENT APPLICATION**
published in accordance with Art. 153(4) EPC

(43) Date of publication:
    **20.12.2017  Bulletin 2017/51**

(51) Int Cl.:
    ***H04N 5/64*** *(2006.01)*     ***G02B 27/02*** *(2006.01)*
    ***G06F 3/01*** *(2006.01)*     ***G09G 5/00*** *(2006.01)*

(21) Application number: **15882030.8**

(22) Date of filing: **06.11.2015**

(86) International application number:
    **PCT/JP2015/081260**

(87) International publication number:
    **WO 2016/129156 (18.08.2016 Gazette 2016/33)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **MA MD**

(30) Priority:  **13.02.2015  JP 2015025929**

(71) Applicant: **Sony Corporation
    Tokyo 108-0075 (JP)**

(72) Inventor: **TSURUMI, Shingo
    Tokyo 108-0075 (JP)**

(74) Representative: **MFG Patentanwälte
    Meyer-Wildhagen Meggle-Freund
    Gerhard PartG mbB
    Amalienstraße 62
    80799 München (DE)**

(54)     **INFORMATION PROCESSING DEVICE, INFORMATION PROCESSING METHOD, AND
    PROGRAM**

(57)     Provided is an information processing apparatus including: a determination unit that determines a wearing state of a device being used while being worn on a user's head on the basis of a distance between an optical axis vector that corresponds to a user's gaze and is estimated on the basis of a captured image obtained by imaging an eye irradiated with light from a light source at a first time point, and an eyeball-center position estimated on the basis of a plurality of the captured images in time series at a second time point before the first time point; and a processing control unit that causes processing corresponding to the determined wearing state to be performed.

**FIG. 12**

EP 3 258 684 A1

## Description

Technical Field

The present disclosure relates to an information processing apparatus, an information processing method, and a program.

Background Art

For example, devices that can be used while being worn on a user's head, such as a head mounted display (which may be represented as "HMD" hereinafter) and an eyewear-type wearable device (which may be represented as simply "eyewear" hereinafter) such as an eyeglasses-type wearable device, have been developed. As a technology related to the HMD, the technology disclosed in the following Patent Literature 1 may be conceived.

Citation List

Patent Literature

Patent Literature 1:    JP 2011-249906A

Disclosure of Invention

Technical Problem

In a device that can be used while being worn on a user's head, various images such as a guide display image disclosed in Patent Literature 1 are displayed on a display screen. Also, when the technology of Patent Literature 1 is used, for example, the guide display image is replaced depending on a wearing state for inputting the details of an image to the left eye of the user and a wearing state for inputting the details of the image to the right eye of the user.

Here, when a device that can be used while being worn on a user's head is used, a wearing state of the device that can be used while being worn on a user's head (which may be called simply "a wearing state") may be changed due to physical deviation of a wearing position of the device that can be used while being worn on a user's head, and the like. However, when the technology disclosed in Patent Literature 1 is used, for example, a guide display image is merely changed in response to a previously decided wearing state. Accordingly, it is not desirable to cope with a change in a wearing state as described above even though images are changed in response to predetermined wearing states as in the technology disclosed in Patent Literature 1, for example.

The present disclosure proposes a novel and improved information processing apparatus, an information processing method and a program which can control processing on the basis of a wearing state of a device that can be used while being worn on a user's head.

Solution to Problem

According to the present disclosure, there is provided an information processing apparatus including: a determination unit that determines a wearing state of a device being used while being worn on a user's head on the basis of a distance between an optical axis vector that corresponds to a user's gaze and is estimated on the basis of a captured image obtained by imaging an eye irradiated with light from a light source at a first time point, and an eyeball-center position estimated on the basis of a plurality of the captured images in time series at a second time point before the first time point; and a processing control unit that causes processing corresponding to the determined wearing state to be performed.

Further, according to the present disclosure, there is provided an information processing method including: determining a wearing state of a device being used while being worn on a user's head on the basis of a distance between an optical axis vector that corresponds to a user's gaze and is estimated on the basis of a captured image obtained by imaging an eye irradiated with light from a light source at a first time point, and an eyeball-center position estimated on the basis of a plurality of the captured images in time series at a second time point before the first time point; and causing processing corresponding to the determined wearing state to be performed.

Further, according to the present disclosure, there is provided a program for causing a computer to execute: determining a wearing state of a device being used while being worn on a user's head on the basis of a distance between

an optical axis vector that corresponds to a user's gaze and is estimated on the basis of a captured image obtained by imaging an eye irradiated with light from a light source at a first time point, and an eyeball-center position estimated on the basis of a plurality of the captured images in time-series at a second time point before the first time point; and causing processing corresponding to the determined wearing state to be performed.

Advantageous Effects of Invention

According to the present disclosure, it is possible to control processing on the basis of a wearing state of a device that can be used while being worn on a user's head.

Note that the effects described above are not necessarily limitative. With or in the place of the above effects, there may be achieved any one of the effects described in this specification or other effects that may be grasped from this specification.

Brief Description of Drawings

[FIG. 1] FIG. 1 is an explanatory diagram of an example of processing related to detection of a gaze according to the present embodiment.
[FIG. 2] FIG. 2 is an explanatory diagram of an example of processing related to detection of a gaze according to the present embodiment.
[FIG. 3] FIG. 3 is an explanatory diagram of an example of processing related to detection of a gaze according to the present embodiment.
[FIG. 4] FIG. 4 is an explanatory diagram of an example of processing related to detection of a gaze according to the present embodiment.
[FIG. 5] FIG. 5 is an explanatory diagram of an example of processing related to detection of a gaze according to the present embodiment.
[FIG. 6] FIG. 6 is an explanatory diagram of an example of processing related to detection of a gaze according to the present embodiment.
[FIG. 7] FIG. 7 is an explanatory diagram of an example of processing related to detection of a gaze according to the present embodiment.
[FIG. 8] FIG. 8 is an explanatory diagram of an example of processing related to detection of a gaze according to the present embodiment.
[FIG. 9] FIG. 9 is an explanatory diagram of an example of processing related to an information processing method according to the present embodiment.
[FIG. 10] FIG. 10 is an explanatory diagram for describing an example of processing related to the information processing method according to the present embodiment.
[FIG. 11] FIG. 11 is an explanatory diagram for describing an example of processing related to the information processing method according to the present embodiment.
[FIG. 12] FIG. 12 is a block diagram illustrating an example of a configuration of an information processing apparatus according to the present embodiment.
[FIG. 13] FIG. 13 is an explanatory diagram of an example of a hardware configuration of the information processing apparatus according to the present embodiment.

Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

In the following, the description is given in the following order.

1. Information processing method according to the present embodiment
2. Information processing apparatus according to the present embodiment
3. Program according to the present embodiment

(Information processing method according to the present embodiment)

Before describing the configuration of an information processing apparatus according to the present embodiment, first an information processing method according to the present embodiment is described. In the following, the information processing method according to the present embodiment is described using, as an example, the case where an information processing apparatus according to the present embodiment performs processing according to the information processing method according to the present embodiment.

As described above, when a device that can be used while being worn on a user's head is used, a wearing state of the device that can be used while being worn on a user's head may be changed due to physical deviation of the wearing position (so called generation of a wearing slippage; physical deviation of a wearing position may be called "wearing slippage" hereinafter). Also, it is impossible to cope with a change in a wearing state as described above even though an existing technology such as the technology disclosed in Patent Literature 1 is used, for example.

Accordingly, an information processing apparatus according to the present embodiment controls processing on the basis of a wearing state of a device that can be used while being worn on a user's head, for example, by performing the following (1) control processing and (2) control processing. The information processing apparatus according to the present embodiment can realize processing corresponding to a wearing state by controlling processing on the basis of the wearing state even when change in the wearing state occurs as described above.

Examples of a device that can be used while being worn on a user's head according to the present embodiment include eyewear (e.g., an eyeglasses-type (including an eyeglass-type) apparatus), an HMD and the like. The device that can be used while being worn on a user's head according to the present embodiment may be the information processing apparatus according to the present embodiment or a device external to the information processing apparatus according to the present embodiment.

(1) Determination processing

The information processing apparatus according to the present embodiment determines a wearing state of a device that can be used while being worn on a user's head on the basis of an optical axis vector and the eyeball-center position corresponding to a user's gaze, which are estimated from a captured image obtained by imaging an eye irradiated with the light from a light source (which may be referred to as simply "captured image" hereinafter).

Here, examples of the light source according to the present embodiment include an infrared light emitting diode (IR LED). The light source according to the present embodiment is not limited to a light source that emits infrared light such as an IR LED. For example, the light source according to the present embodiment may be a light source emitting light having any wavelength that can detect a corneal reflection image obtained when the light from the light source is reflected on the cornea (also referred to as a Purkinje image) from a captured image. The corneal reflection image is used for detection of a user's gaze and the like, for example. In the following, the corneal reflection image corresponding to the light source according to the present embodiment may be referred to as a "bright spot."

Further, examples of the captured image according to the present embodiment include a captured image captured by an imaging device included in a device that can be used while being worn on a user's head. The captured image according to the present embodiment may be a captured image captured by an external imaging device connected to the device that can be used while being worn on a user's head mentioned above.

The light source according to the present embodiment may be, for example, a light source included in a device that can be used while being worn on a user's head according to the present embodiment, or may be an external light source connected to a device that can be used while being worn on a user's head according to the present embodiment.

Note that the captured image according to the present embodiment is not limited to an image captured by an imaging device included in a device that can be used while being worn on a user's head or an external imaging device connected to a device that can be used while being worn on a user's head. For example, the captured image according to the present embodiment may be an image captured by any imaging device capable of imaging an eye irradiated with the light from a light source. Further, the light source according to the present embodiment may be a light source included in a certain device, or may be an independent light source independent of other devices. The light source according to the present embodiment is provided in a position that allows the generated light to be applied to the user's eye, for example.

In the following, the case where the captured image according to the present embodiment is an image captured by an imaging device included in a device that can be used while being worn on a user's head (or an external imaging device connected to a device that can be used while being worn on a user's head) is mainly used as an example. In the following, the imaging device may be referred to as a "camera."

The determination process according to the present embodiment will be described in detail. The information processing apparatus according to the present embodiment determines a wearing state on the basis of a distance between an optical axis vector corresponding to a user's gaze estimated on the basis of a captured image at a first time point and the eyeball-center position estimated on the basis of a plurality of captured images in time series at a second time point before the first time point.

The optical axis vector according to the present embodiment is an example of a vector corresponding to a gaze. For example, the optical axis vector according to the present embodiment corresponds to a vector directed toward the outside of the eyeball, which connects a cornea-center position (three-dimensional position of the cornea-center (cornea-curvature-center)) and a pupil-center position (three-dimensional position of the pupil-center).

Here, when a wearing state of the device that can be used while being worn on a user's head according to the present embodiment is not changed, the optical axis vector is not changed. Also, in the eye of a user, the cornea-center position, the pupil-center position, and the eyeball-center position (three-dimensional position of the eyeball-center) are collinear.

Accordingly, the information processing apparatus according to the present embodiment calculates a distance between an optical axis vector estimated at a time t (an example of the first time point) and the eyeball-center position estimated at any time point (an example of the second time point) before a time t-1 and compares the calculated distance with a threshold value.

Here, the threshold value according to determination of a change in a wearing state according to the present embodiment may be a previously set fixed value or a variable value which can be appropriately set by a user manipulation or the like. For example, the threshold value with respect to determination of a change in a wearing state according to the present embodiment is set from the viewpoint of "whether a display position on a display screen corresponding to the device that can be used while being worn on a user's head is set to a position which can be allowed by a user wearing the device" and "whether the position is a position at which the user can be authenticated with iris authentication."

In addition, examples of the display screen corresponding to the device that can be used while being worn on a user's head include "a display screen of a display device which is included in the device that can be used while being worn on a user's head and located in a direction to which a user's gaze is directed when the user wears the device" and "a display screen of a display device which is connected to the device that can be used while being worn on a user's head and located in a direction to which a user's gaze is directed when the user wears the device."

The information processing apparatus according to the present embodiment determines that wearing slippage does not occur, for example, when the calculated distance is equal to or less than the set threshold value (or when the distance is less than the threshold value). Also, the information processing apparatus according to the present embodiment determines that wearing slippage occurs when the calculated distance is greater than the set threshold value (or when the distance is equal to or greater than the threshold value).

The information processing apparatus according to the present embodiment can determine a wearing state of the device that can be used while being worn on a user's head by comparing the calculated distance with the threshold, for example, as described above.

Also, the information processing apparatus according to the present embodiment can detect a change in a wearing state of the device that can be used while being worn on a user's head by determining the wearing state, for example, as described above. The information processing apparatus according to the present embodiment may detect a change in the wearing state also when it is assessed that a change in the wearing state has occurred successively in a plurality of frames for the number that has been set for example.

Here, the optical axis vector used in the determination process according to the present embodiment may be estimated, for example, as a part of a process related to detection of gaze, in which a vector corresponding to a user's gaze is estimated using a corneal reflection method of using a corneal reflection image obtained when light from a light source is reflected on the cornea. Of course, the optical axis vector according to the present embodiment may be estimated by a processing independent of the aforementioned processing related to detection of a gaze. The process related to estimation of the optical axis vector according to the present embodiment may be performed by the information processing apparatus according to the present embodiment or a device external to the information processing apparatus according to the present embodiment.

Also, the eyeball-center position used in the determination processing according to the present embodiment is estimated on the basis of a plurality of time-series captured images. The process related to estimation of the eyeball-center position according to the present embodiment may be performed by the information processing apparatus according to the present embodiment or a device external to the information processing apparatus according to the present embodiment.

Hereinafter, an example of the processing related to estimation of the optical axis vector used in the determination processing according to the present embodiment and an example of the processing related to estimation of the eyeball-center position used in the determination processing according to the present embodiment will be described. Also, a case in which the optical axis vector used in the determination processing according to the present embodiment is estimated by the processing related to detection of a gaze will be described as an example.

[Example of processing related to estimation of optical axis vector]

First of all, an example of the processing related to estimation of the optical axis vector used in the determination processing according to the present embodiment will be described. A case in which the processing related to estimation of the optical axis vector is performed by the information processing apparatus according to the present embodiment will be described below as an example. Also, an example of the processing related to detection of a gaze including the processing related to estimation of the optical axis vector will be described below.

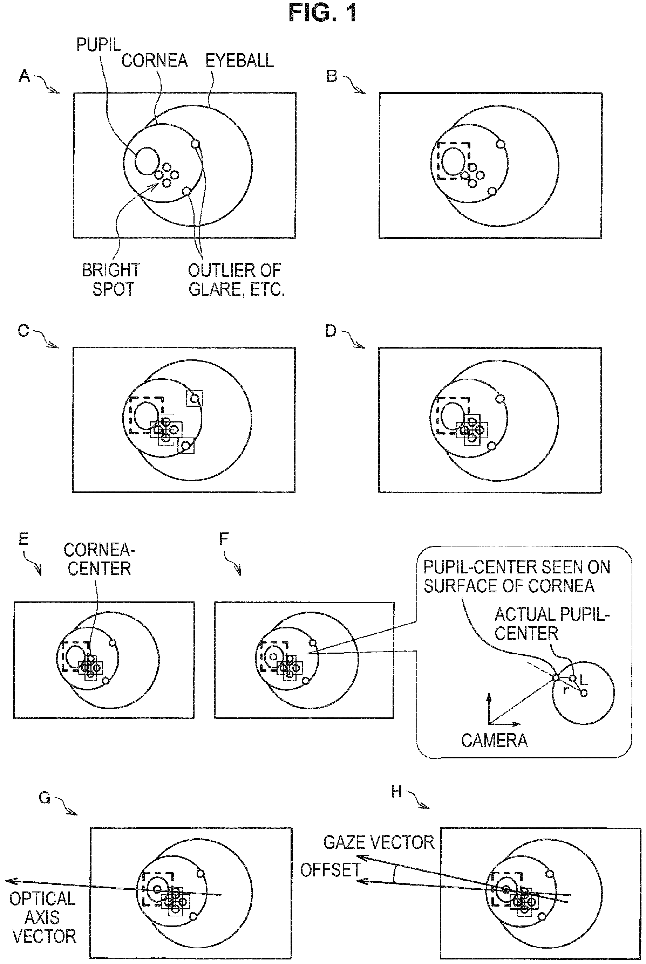

FIG. 1 is an explanatory diagram of an example of the processing related to detection of the gaze according to the present embodiment and shows an example of the processing related to detection of the gaze using a corneal reflection method.

Here, A of FIG. 1 shows an example of the captured image. As shown in A of FIG. 1, a pupil, bright spots on a cornea (corneal reflection images), outliers of the bright spot, etc. are included in the captured image, for example. A of FIG. 1 shows an example in which four bright spots corresponding to the light from four light sources are included in the captured image. The outliers of the bright spots may be included in the captured image and appear like a corneal reflection image according to a glare of the light from a light source (illumination or the like) different from the light source for obtaining the corneal reflection image, reflection at the edge of a contact lens attached to the eye, and the like.

Also, B of FIG. 1 to H of FIG. 1 illustrate an example of the processing related to detection of a gaze performed on the captured image illustrated in A of FIG. 1. FIG. 1 illustrates an example in which the number of light sources related to detection of bright spots is four.

The processing related to detection of a gaze includes seven steps illustrated in the following (i) to (vii), for example.

(i) First step: detection of pupil by image recognition (B of FIG. 1)

The information processing apparatus according to the present embodiment detects the pupil from the captured image shown in A of FIG. 1.

The information processing apparatus according to the present embodiment detects the pupil by converting the captured image to two values and assessing an area including the pupil, for example. The method for detecting the pupil from the captured image is not limited to the example described above. For example, the information processing apparatus according to the present embodiment may use any method that can detect the pupil from an image, such as "a method using the feature value of pixel difference (for example, the difference between the pixel values (luminance values) of each of a plurality of combinations of two pixels set on an image; this similarly applies hereinafter) and boosting technology."

(ii) Second step: detection of candidate for corneal reflection image by image recognition (C of FIG. 1)

The information processing apparatus according to the present embodiment detects a candidate for the corneal reflection image using "a method using the feature value of pixel difference and boosting technology," for example.

Here, as described above, an outlier that appears like a corneal reflection image may exist in the captured image. Hence, in the case where a candidate for the corneal reflection image is detected by image recognition using a method like the above, the corneal reflection image and the outlier may be detected as a candidate for the corneal reflection image.

(iii) Third step: detection of corneal reflection image (D of FIG. 1)

The information processing apparatus sets the range of existence of corneal reflection images (bright spot) on the basis of the position of the pupil identified from the captured image (hereinafter, referred to as "the position of appearance of the pupil"), and selects not more than four candidates for the corneal reflection image, which number is the same as the number of light sources, from the candidates for the corneal reflection image existing in the range of existence; thereby, detects corneal reflection images, for example. The information processing apparatus according to the present embodiment may detect corneal reflection images also by selecting not more than four candidates for the corneal reflection image, which number is the same as the number of light sources, on the basis of a score of a corneal reflection image detector constructed using machine learning or the like, for example.

Note that the method of detecting a corneal reflection image according to the present embodiment is not limited to the above method.

For example, the corneal reflection image according to the present embodiment may be detected by performing the processing illustrated in (a) to (d) below.

(a) Estimation of eyeball-center position

The information processing apparatus according to the present embodiment estimates the eyeball-center position on the basis of a plurality of time-series captured images.

Examples of the plurality of time-series captured images according to the present embodiment include frame images (still images) constituting moving images. In the following, the frame image may be referred to as simply a "frame."

In the case where the corneal reflection method is used, the three-dimensional positions of the cornea-curvature-center and the pupil-center are found from a corneal reflection image and the position of the pupil observed on an image; but in the corneal reflection method, the three-dimensional position of the eyeball-center cannot be directly estimated.

Thus, the information processing apparatus according to the present embodiment uses time-series captured images, and estimates, as the eyeball-center position, the point of intersection of the optical axis vectors at the time points obtained on the basis of the plurality of captured images.

The optical axis vector at each time point is estimated by the processing described with reference to FIG. 1, for example. Further, by excluding outliers of the estimated optical axis vector, the reduction in the accuracy of estimation of the eyeball-center position due to the influence of outliers can be prevented, for example.

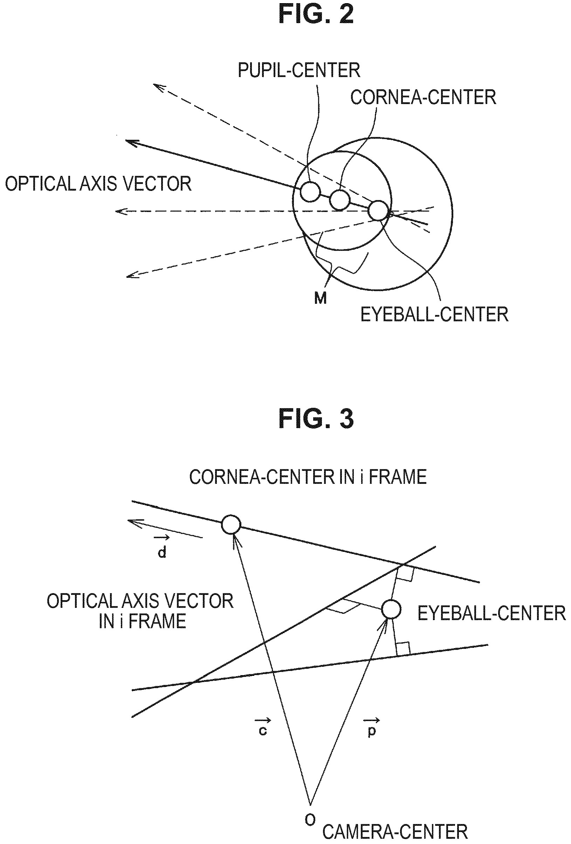

FIG. 2 is an explanatory diagram of an example of the processing related to the detection of the gaze according to the present embodiment, and shows an overview of processing for the estimation of the eyeball-center position.

As shown in FIG. 2, optical axis vectors do not precisely cross at one point due to the influence of an error etc. Thus, the information processing apparatus according to the present embodiment takes the nearest point of a plurality of optical axis vectors as the eyeball-center position.

Here, in the case where the device that can be used while being worn on a user's head according to the present embodiment is an eyewear such as an eyeglass-type wearable device and an imaging device is fixed to the device that can be used while being worn on a user's head, it can be assumed that, "unless a wearing slippage of the device that can be used while being worn on a user's head (an example of the change in the wearing state of the device that can be used while being worn on a user's head) occurs, the eyeball-center position is fixed with respect to the imaging device."

FIG. 3 is an explanatory diagram of an example of the processing related to the detection of the gaze according to the present embodiment, and shows an overview of processing for the estimation of the eyeball-center position. In FIG. 3, the position of the imaging device is shown as "camera-center," and an example in which the camera-center is taken as the origin is shown. In the following, a vector may be written as "$\vec{x}$" for the sake of convenience.

As shown in FIG. 3, the cornea-center position is denoted by "$\vec{c}$", the optical axis vector by "$\vec{d}$", and the eyeball-center position desired to be found by "$\vec{p}$". Point $L_i$ on the i-th (i being a positive integer) optical axis vector is expressed by Mathematical Formula 1 below, for example. Here, "$t_i$" shown in Mathematical Formula 1 is an auxiliary variable.

[Math. 1]

$$L_i = \vec{d_i} \cdot t_i + \vec{c_i} \qquad \text{... Mathematical Formula 1}$$

The distance between the eyeball-center position and point $L_i$ on the optical axis vector is expressed by Mathematical Formula 2 below.

[Math. 2]

$$\left| L_i - \vec{p_i} \right| = \left| \vec{d_i} \cdot t_i + \vec{c_i} - \vec{p_i} \right| \qquad \text{... Mathematical Formula 2}$$

Thus, the information processing apparatus according to the present embodiment finds a point that minimizes the sum of squares of the distances to point $L_i$ for all "i"s, and takes the found point as the eyeball-center position, for example. Specifically, the information processing apparatus according to the present embodiment solves the n+1 (n being a positive integer) simultaneous equations shown in Mathematical Formula 3 below to find the value of p, and thereby estimates the eyeball-center position, for example. Here, "F" shown in Mathematical Formula 3 below is expressed by Mathematical Formula 4 below, for example.

[Math. 3]

$$\begin{cases}\dfrac{\partial F}{\partial t_i} = \dfrac{\partial}{\partial t_i}\left[\dfrac{1}{2}\sum_{i=0}^{n-1}\left\{t_i^2\cdot\left(\vec{d_i}^T\cdot\vec{d_i}\right)\right\}+\dfrac{1}{2}\sum_{i=0}^{n-1}\left\{t_i\cdot\vec{d_i}^T\cdot\left(\vec{c_i}-\vec{p}\right)\right\}+\dfrac{1}{2}\sum_{i=0}^{n-1}\left\{\left(\vec{c_i}-\vec{p}\right)^T\cdot\left(\vec{c_i}-\vec{p}\right)\right\}\right] \\[4mm] \quad = t_i\cdot\left(\vec{d_i}^T\cdot\vec{d_i}\right)+\vec{d_i}^T\cdot\left(\vec{c_i}-\vec{p}\right)=0 \\[4mm] \dfrac{\partial F}{\partial\vec{p}} = -\sum_{i=0}^{n-1}\left(ti\cdot\vec{d_i}+\vec{c_i}\right)+n\,\vec{p}=0\end{cases}$$

... Mathematical Formula 3

[Math. 4]

$$F(t_0,t_1,...,t_{n-1},\vec{p}) = \frac{1}{2}\sum_{i=0}^{n-1}\left|\vec{d_i}\cdot t_i+\vec{c_i}-\vec{p_i}\right|^2$$

... Mathematical Formula 4

(b) Estimation of cornea-center position

The information processing apparatus according to the present embodiment estimates the cornea-center position on the basis of the eyeball-center position estimated by the processing of (a) mentioned above.

Specifically, the information processing apparatus according to the present embodiment performs the processing of (b-1) and (b-2) below, and thereby estimates the cornea-center position, for example.

(b-1) Estimation of pupil-center position

The information processing apparatus according to the present embodiment estimates the pupil-center position on the basis of the eyeball-center position estimated by the processing of (a) mentioned above. Here, the principle of the processing of (b-1) is similar to the processing of the fifth step shown in (v) mentioned below.

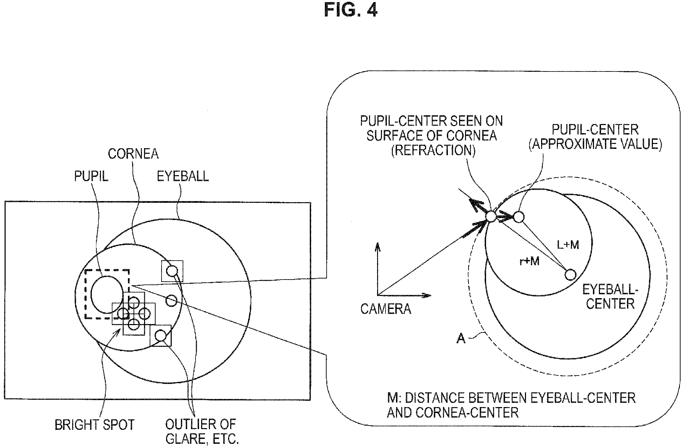

FIG. 4 is an explanatory diagram of an example of the processing related to the detection of the gaze according to the present embodiment, and shows an overview of processing for the estimation of the pupil-center position.

A of FIG. 4 shows a sphere with the center at the eyeball-center position and a radius of r + M. Here, r represents the radius of the cornea, and M represents the distance between the eyeball-center and the cornea-center (hereinafter, this similarly applies to the description of the other drawings). L shown in FIG. 4 represents the distance between the cornea-center and the pupil-center (hereinafter, this similarly applies to the description of the other drawings). The radius r of the cornea, the distance M between the eyeball-center and the cornea-center, and the distance L between the cornea-center and the pupil-center correspond to examples of the information concerning the eye according to the present embodiment.

Here, the radius r of the cornea and the distance L between the cornea-center and the pupil-center may be a set fixed value, for example. The distance M between the eyeball-center and the cornea-center may be a value estimated on the basis of the position of the eyeball-center estimated by the processing of (a) mentioned above, or may be a set fixed value, for example. The estimation of the distance M between the eyeball-center and the cornea-center may be performed at an arbitrary timing after the position of the eyeball-center is estimated in the processing of (a) mentioned above.

The information processing apparatus according to the present embodiment assumes that the pupil is refracted on the surface of the sphere shown by A of FIG. 4, and calculates the three-dimensional position of the pupil-center using Snell's law, for example.

(b-2) Estimation of cornea-center position

The information processing apparatus according to the present embodiment estimates, as the cornea-center position, a position on the line segment connecting the eyeball-center position estimated by the processing of (a) mentioned above and the pupil-center position estimated by the processing of (b-1) mentioned above, for example.

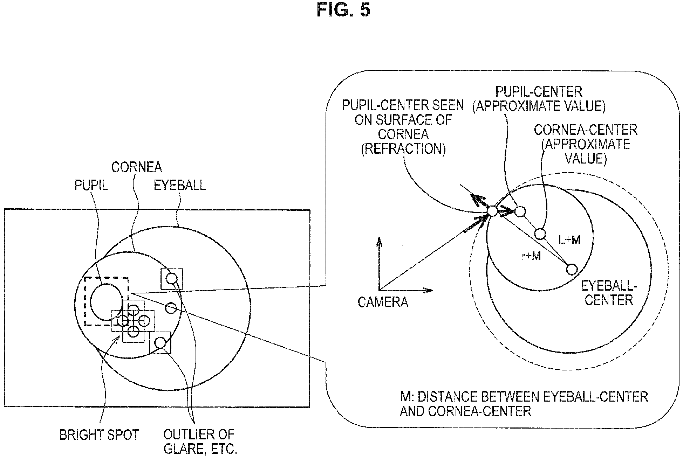

FIG. 5 is an explanatory diagram of an example of the processing related to the detection of the gaze according to the present embodiment, and shows an overview of processing for the estimation of the cornea-center position.

The information processing apparatus according to the present embodiment estimates, as the cornea-center position, point (x, y, z) that divides the line segment connecting the estimated pupil-center position and the estimated eyeball-center position to L:M on the basis of the distance L between the cornea-center and the pupil-center (an example of the information concerning the eye) and the distance M between the eyeball-center and the cornea-center (an example of the information concerning the eye), for example.

(c) Estimation of position of candidate for corneal reflection image

The information processing apparatus according to the present embodiment estimates the position of a candidate for the corneal reflection image on the basis of the cornea-center position estimated by the processing of (b) mentioned above. In the following, the position of a candidate for the corneal reflection image may be referred to as "the position of a candidate for the bright spot."

The information processing apparatus according to the present embodiment estimates the position of a candidate for the corneal reflection image on the basis of the estimated cornea-center position, information concerning the eye, and the position of a light source, for example.

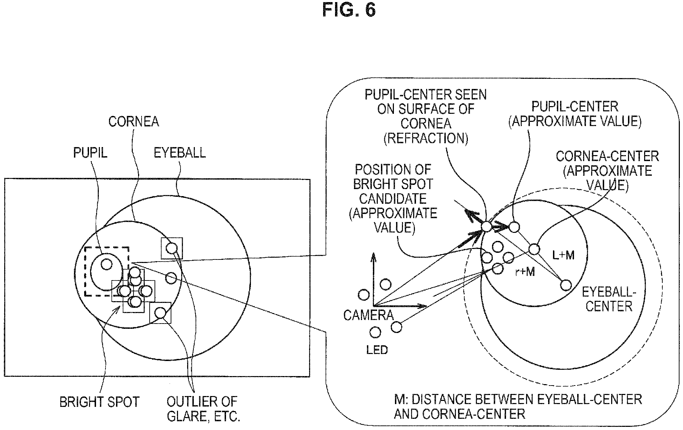

FIG. 6 is an explanatory diagram of an example of the processing related to the detection of the gaze according to the present embodiment, and shows an overview of processing for the estimation of the position of a candidate for the corneal reflection image.

The information processing apparatus according to the present embodiment finds the position (x, y, z) of the reflection of the light of a light source using the law of reflection on the basis of the estimated cornea-center position, the radius r of the cornea (an example of the information concerning the eye), and data showing the placement of an IR LED with respect to the imaging device (an example of the information showing the position of the light source), for example. Then, the information processing apparatus according to the present embodiment projects the found position (x, y, z) of reflection on the image plane, and thereby estimates the position of a candidate for the corneal reflection image (for example, a position expressed by the (u, v) coordinates).

The processing for the estimation of the position of a candidate for the corneal reflection image will now be described more specifically.

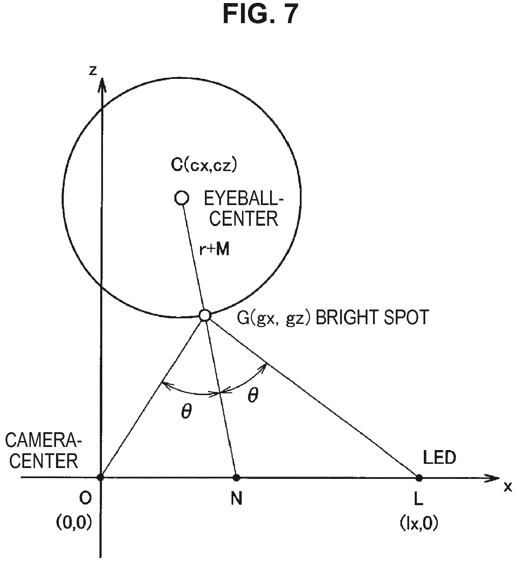

FIG. 7 is an explanatory diagram of an example of the processing related to the detection of the gaze according to the present embodiment, and shows an overview of processing for the estimation of the position of a candidate for the corneal reflection image. O(0, 0) shown in FIG. 7 indicates the camera-center, and L shown in FIG. 7 indicates the position of one IR LED (an example of the light source). C(cx, cy) shown in FIG. 7 indicates the eyeball-center position, and G(gx, gz) shown in FIG. 7 indicates the position of a bright spot.

According to the law of spherical reflection, the camera-center, the bright spot, the IR LED, and the eyeball-center exist on the same plane. As shown in FIG. 7, on the plane mentioned above, an x-axis is set in the direction passing through the camera-center and the position of the IR LED, and a z-axis is set in a direction orthogonal to the x-axis and toward near the eyeball-center position, for example.

Here, the angle of incidence and the angle of reflection of the light of the IR LED (an example of the light of the light source) are equal, and thus θ = angle OGN = angle LGN. G(gx, gz) is a point on the circumference of a circle with the center at the eyeball-center C(cx, cy) and a radius of r + M.

The information processing apparatus according to the present embodiment solves the nonlinear simultaneous equations shown in Mathematical Formula 5 below for gx and gy, and converts the solution to the directional vector of the bright spot (the corneal reflection image) in the camera coordinate system; thereby, finds the position (u, v) of a candidate for the corneal reflection image, for example.

[Math. 5]

$$\begin{cases} \dfrac{\vec{GO} \cdot \vec{CG}}{\left|\vec{GO}\right| \times \left|\vec{CG}\right|} = \dfrac{\vec{GL} \cdot \vec{CG}}{\left|\vec{GL}\right| \times \left|\vec{CG}\right|} \\ (gx - cx)^2 + (gz - cz)^2 = (r + M)^2 \end{cases}$$

... Mathematical Formula 5

(d) Detection of corneal reflection image

The information processing apparatus according to the present embodiment detects a corneal reflection image from a captured image on the basis of the position of the candidate for the corneal reflection image estimated by the processing of (c) mentioned above.

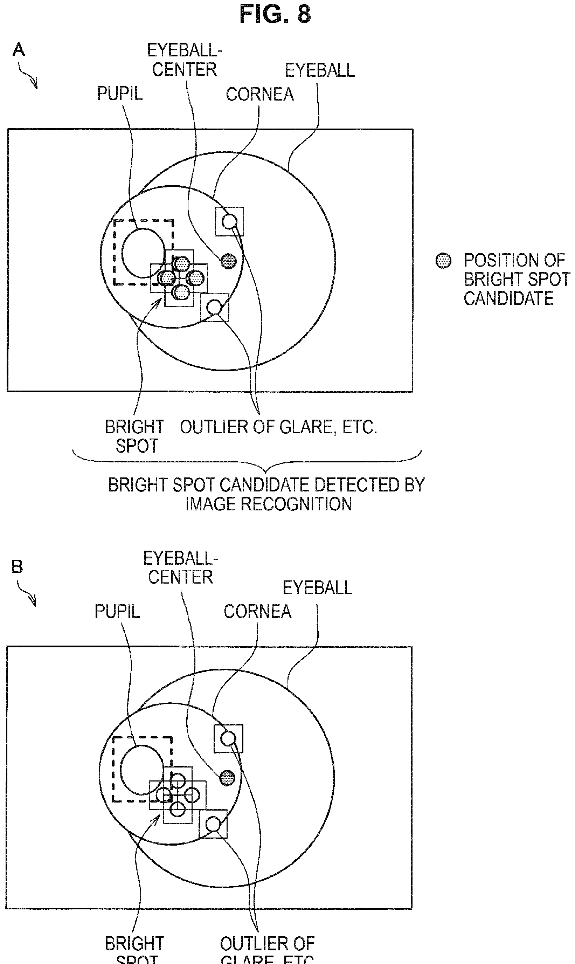

FIG. 8 is an explanatory diagram of an example of the processing related to the detection of the gaze according to the present embodiment, and shows an overview of processing for the detection of a corneal reflection image.

The information processing apparatus according to the present embodiment detects a corneal reflection image from a captured image using, as constraints, "the distance between the position of the candidate for the corneal reflection image detected by image recognition by the processing according to the second step described in (ii) mentioned above and the position of the candidate for the corneal reflection image estimated by the processing of (c) mentioned above," "the slopes in the u-direction and the v-direction between corneal reflection images corresponding to the positional relationships between a plurality of IR LEDs," etc., for example.

The information processing apparatus according to the present embodiment can also detect the corneal reflection image from the captured image by performing the processing described in (a) to (d) mentioned above, for example, in the processing related to the third step described in (iii) mentioned above.

Here, by performing the processing described in (a) to (d) mentioned above, it is possible to remarkably reduce the range occupied by corneal reflection images for detecting the corneal reflection image as compared with a case in which the processing is performed in the processing related to the third step described in (iii) mentioned above.

Accordingly, it is possible to detect the corneal reflection image with higher accuracy from the captured image in a case in which the processing described in (a) to (d) mentioned above is performed in the third step described in (iii) mentioned above as compared with a case in which the processing related to the third step described in (iii) mentioned above is performed.

Also, by performing each processing described in (iv) to (vii) which will be mentioned later using the corneal reflection image detected by the processing described in (a) to (d) mentioned above in the third step described in (iii) mentioned above, it is possible to further increase the accuracy of estimation of the vector (an optical axis vector or a gaze vector obtained by correcting the optical axis vector) corresponding to the gaze more as compared with a case in which the processing related to the third step described in (iii) mentioned above is performed.

(iv) Fourth step: estimation of cornea-center position (three-dimensional position) using positions of corneal reflection images (E of FIG. 1)

The information processing apparatus according to the present embodiment estimates the cornea-center position on the basis of information (data) concerning the eye such as the positions (u and v coordinates) of the plurality of detected corneal reflection images, the positions of the light sources, and the radius of the cornea (the curvature radius of the cornea), for example.

Here, the value shown by information concerning the eye according to the present embodiment such as the curvature radius of the cornea and other information described later (for example, data showing a value related to the eye such as the distance between the eyeball-center and the cornea-center and the distance between the cornea-center and the pupil-center) is a fixed value set in advance, for example. The value shown by information concerning the eye according to the present embodiment may be a value unique to the user, or may be a value standardized using the unique values of a plurality of users. In the case where the value shown by information concerning the eye according to the present embodiment is a value unique to the user, information concerning the eye corresponding to the user identified by any method that can authenticate the user, such as biometric authentication or password authentication, is used.

(v) Fifth step: estimation of pupil-center position (three-dimensional position) (F of FIG. 1)

The information processing apparatus according to the present embodiment estimates the pupil-center position using information concerning the eye such as the cornea-center position estimated in the fourth step described in (iv) mentioned above, the distance L between the cornea-center and the pupil-center, and the radius r of the cornea, and the law of refraction, for example. The information processing apparatus according to the present embodiment estimates the pupil-center position using the principle similar to the processing (estimation of the pupil-center position) of (b-1) mentioned above, for example.

(vi) Sixth step: estimation of optical axis vector (G of FIG. 1)

The information processing apparatus according to the present embodiment estimates an optical axis vector (an example of the vector corresponding to the gaze) using the cornea-center position estimated in the fourth step described in (iv) mentioned above and the pupil-center position estimated in the fifth step described in (v) mentioned above, for example.

The information processing apparatus takes a vector directed toward the outside of the eyeball and connecting the cornea-center position and the pupil-center position as the optical axis vector, for example.

(vii) Seventh step: estimation of gaze vector (H of FIG. 1)

A gaze vector that is a vector indicating the gaze (an example of the vector corresponding to the gaze) is a vector connecting the fovea centralis and the cornea-center of the eye. As shown in H of FIG. 1, a shift may occur between the gaze vector and the optical axis vector.

The information processing apparatus according to the present embodiment corrects the optical axis vector estimated in the sixth step described in (vi) mentioned above using an offset value obtained by calibration, and thereby estimates the gaze vector, for example. The offset value according to the present embodiment may be a fixed value set in advance, for example.

For example, the optical axis vector and the gaze vector which are vectors corresponding to a gaze are estimated by the processing related to the first step described in (i) mentioned above to the processing related to the seventh step described in (vii) mentioned above.

[Example of processing related to estimation of eyeball-center position]

Next, an example of the processing related to estimation of the eyeball-center position used in the determination processing according to the present embodiment will be described. A case in which the processing related to estimation of the eyeball-center position is performed by the information processing apparatus according to the present embodiment will be described below as an example.

The information processing apparatus according to the present embodiment estimates the eyeball-center position, for example, by the processing (estimation of the eyeball-center position) described in (a) mentioned above.

Here, the processing (estimation of the eyeball-center position) described in (a) mentioned above may be performed as a part of the processing related to detection of a gaze or performed as processing independent of the processing related to detection of a gaze.

The optical axis vector and the eyeball-center position used in the determination processing according to the present embodiment are estimated, for example, by the processing as described above.

Also, the information processing apparatus according to the present embodiment determines a wearing state, for example, on the basis of the result of the comparison between the distance between the optical axis vector estimated at the first time point and the eyeball-center position estimated at the second time point before the first time point, and the threshold value, as described above.

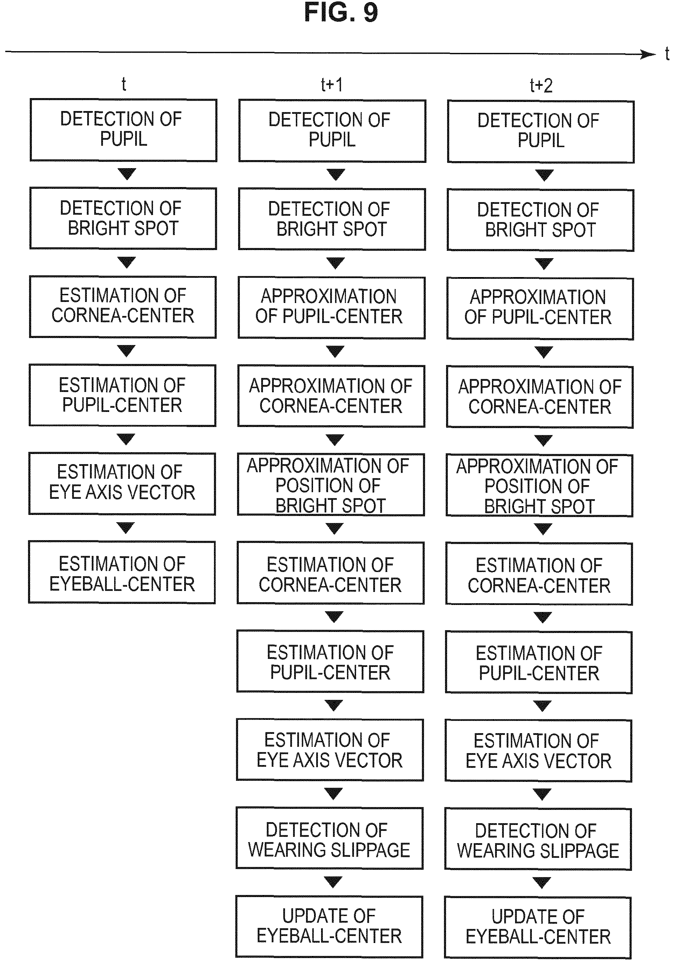

FIG. 9 is an explanatory diagram of an example of processing related to an information processing method according to the present embodiment. FIG. 9 illustrates an example in which the information processing apparatus according to the present embodiment performs the determination processing according to the present embodiment along with the processing related to detection of a gaze as described with reference to FIG. 1. Here, "wearing slippage detection" shown in FIG. 9 corresponds to an example of the determination process according to the present embodiment. Also, the optical axis vector and the gaze vector are collectively referred to as "eye axis vector" in FIG. 9.

At a time t shown in FIG. 9, the information processing apparatus according to the present embodiment performs the processing related to the first step described in (i) mentioned above to the processing related to the seventh step described in (vii) mentioned above. Here, the information processing apparatus according to the present embodiment does not perform the determination processing according to the present embodiment at the time t, as shown in FIG. 9.

At a time t+1 and a time t+2 shown in FIG. 9, the information processing apparatus according to the present embodiment basically performs the processing related to the first step described in (i) mentioned above to the processing related to the seventh step described in (vii) mentioned above, and performs the processing (estimation of the eyeball-center position) described in (a) mentioned above to the processing (detection of the corneal reflection image) described in (d) mentioned above in the third step described in (iii) mentioned above.

Also, the determination processing according to the present embodiment is performed at the time t+1 and the time t+2 shown in FIG. 9, as represented by "wearing slippage detection" in FIG. 9. Here, when a change in the wearing state is detected by the determination processing according to the present embodiment, the information processing apparatus according to the present embodiment performs the processing from the time t shown in FIG. 9 again.

The information processing apparatus according to the present embodiment determines the wearing state of the device that can be used while being worn on a user's head, for example, by performing the processing as shown in FIG. 9 at each time.

As described above, the processing related to estimation of the optical axis vector according to the present embodiment and the processing related to estimation of the eyeball-center position according to the present embodiment may be performed by the information processing apparatus according to the present embodiment or a device external to the information processing apparatus according to the present embodiment. When the processing related to estimation of the optical axis vector according to the present embodiment and the processing related to estimation of the eyeball-center position according to the present embodiment are performed by the external device, the information processing apparatus according to the present embodiment performs the determination processing according to the present embodiment using an estimation result obtained from the external device.

(2) Control processing

The information processing apparatus according to the present embodiment causes processing corresponding to the wearing state of the device that can be used while being worn on a user's head, determined in the processing (determination processing) of (1) mentioned above, to be performed. For example, the information processing apparatus according to the present embodiment causes a target for performing the processing corresponding to the wearing state to perform the processing corresponding to the wearing state by transmitting control information (data) including a processing command, processing data of processing corresponding to the processing command and the like.
Here, examples of the target for performing the processing corresponding to the wearing state according to the present embodiment include the device that can be used while being worn on a user's head.
The target that is caused to perform the processing corresponding to the wearing state by the information processing apparatus according to the present embodiment is not limited to the device that can be used while being worn on a user's head.
For example, the target may be a device external to the device that can be used while being worn on a user's head, such as a device correlated to the user who wears the device that can be used while being worn on a user's head. When the user who wears the device that can be used while being worn on a user's head is authenticated, the information processing apparatus according to the present embodiment identifies a device corresponding to information indicating the authenticated user, for example, using "a table (or a database) in which information indicating users (e.g., data such as user IDs) and information about devices of targets for performing processing corresponding to wearing states (e.g., data such as device IDs and addresses for performing communication) are correlated. Then, the information processing apparatus according to the present embodiment regards the identified device as a target for performing the processing corresponding to the wearing state.

(2-1) First example of control processing

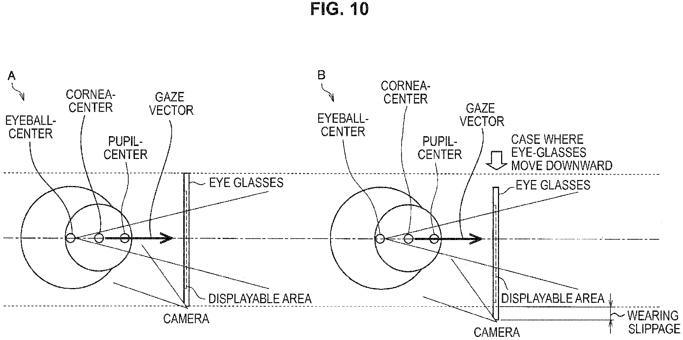

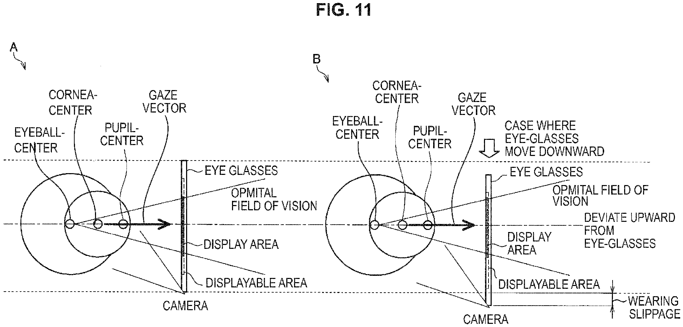

The information processing apparatus according to the present embodiment controls the display position on the display screen corresponding to the device that can be used while being worn on a user's head when a change in the wearing state of the device that can be used while being worn on a user's head has been detected.
More specifically, the information processing apparatus according to the present embodiment sets the display position on the display screen corresponding to the device that can be used while being worn on a user's head to be, for example, a display position corresponding to the optical axis vector when a change in the wearing state of the device that can be used while being worn on a user's head has been detected, for example.
Here, examples of the display screen corresponding to the device that can be used while being worn on a user's head include "a display screen of a display device which is included in the device that can be used while being worn on a user's head and located in a direction to which the user's gaze is directed at the time of wearing the device" and "a display screen of a display device which is connected to the device that can be used while being worn on a user's head and located in a direction to which the user's gaze is directed at the time of wearing the device."
Also, examples of the display position corresponding to the optical axis vector according to the present embodiment include "a display position at which the position of the intersection of the gaze vector obtained by correcting the optical axis vector and the display screen corresponding to the device that can be used while being worn on a user's head, on the display screen, is set to the position of the center of a display area in which display is performed." Also, the display position corresponding to the optical axis vector according to the present embodiment may be, for example, "a display position at which the position of the intersection of the optical axis vector and the display screen corresponding to the device that can be used while being worn on a user's head, on the display screen, is set to the position of the center of the display area in which display is performed."
FIGS. 10 and 11 are explanatory diagrams of an example of the processing related to the information processing method according to the present embodiment. A shown in FIG. 10 and A shown in FIG. 11 indicate a case in which wearing slippage does not occur, and B shown in FIG. 10 and B shown in FIG. 11 indicate a case in which wearing slippage occurs. Also, FIGS. 10 and 11 illustrate an example in which the device that can be used while being worn on a user's head is an eyewear.

When wearing slippage occurs (an example of a change in the wearing state), the position of a displayable area in which images, characters and the like can be displayed is changed due to the wearing slippage, as illustrated in A and B of FIG. 10. Accordingly, the information processing apparatus according to the present embodiment causes the display area to be set to the display position corresponding to the optical axis vector when the wearing slippage occurs, as illustrated in B of FIG. 11.

For example, by setting the display area to the display position corresponding to the optical axis vector, as shown in B of FIG. 11, the user who wears the device that can be used while being worn on a user's head can see details displayed in the display area as in the case in which wearing slippage does not occur shown in A of FIG. 11 even when wearing slippage has occurred.

Also, when the state in which the wearing slippage occurs, shown in B of FIG. 10, changes to the state in which the wearing slippage does not occur, shown in A of FIG. 10 (an example of a change in the wearing state), for example, the information processing apparatus according to the present embodiment causes the display area to be set to the display position corresponding to the optical axis vector, as shown in A of FIG. 11. Accordingly, the user who wears the device that can be used while being worn on a user's head can view details displayed in the display area as in the case in which the wearing slippage shown in B of FIG. 11 occurs even in the aforementioned case.

For example, as illustrated in FIG. 11, the control processing according to the first example is performed and, as a result, the display position is automatically adjusted. Accordingly, it is possible to achieve realization of optimization of the display position and also improve convenience for the user who wears the device that can be used while being worn on a user's head by performing the control processing according to the first example.

(2-2) Second example of control processing

The information processing apparatus according to the present embodiment notifies that a change in the wearing state is detected.

For example, the information processing apparatus according to the present embodiment causes a display device to perform visual notification by causing a character or an image to be displayed, or causes a sound output device to perform auditory notification by causing sound (including music) to be outputted; thereby, causes the fact that a change in the wearing state is detected to be notified to the user, for example. The information processing apparatus according to the present embodiment causes the fact that a change in the wearing state is detected to be notified to the user by causing a display device or a sound output device to transmit a control signal or data concerning notification to a communication unit (described later) included in the information processing apparatus according to the present embodiment or to an external communication device, for example.

By performing the control processing according to the second example, it is possible to prompt the user to adjust wearing of the device that can be used while being worn on a user's head, for example, in "a case in which the display position on the display screen corresponding to the device that can be used while being worn on a user's head cannot be set to the position which can be allowed by the user who wears the device because wearing slippage occurs, " "a case in which the user cannot be authenticated with iris authentication because the wearing slippage occurs" and the like.

Further, details of notification related to the control processing according to the second example are not limited to notification of detection of a change in the wearing state and may include, for example, other notification details regarding wearing slippage, such as notification of directly prompting the user to adjust wearing of the device that can be used while being worn on a user's head.

(2-3) Third example of control processing

The information processing apparatus according to the present embodiment controls the display position on the display screen corresponding to the device that can be used while being worn on a user's head depending on the detection frequency of a change in the wearing state of the device that can be used while being worn on a user's head.

More specifically, the information processing apparatus according to the present embodiment causes a method of displaying on the display screen corresponding to the device that can be used while being worn on a user's head to be changed, for example, depending on the detection frequency of a change in the wearing state.

For example, when the user who wears the device that can be used while being worn on a user's head is exercising, riding in a vehicle, or the like, wearing slippage may occur frequently. The information processing apparatus according to the present embodiment determines that wearing slippage frequently occurs, for example, when a value indicating the frequency of detection of a change in the wearing state (e.g., a value indicating the number of detections of a change in the wearing state) is equal to or greater than a set threshold value with respect to the frequency (or when the frequency of detection exceeds the threshold value). The threshold value with respect to the frequency of detection of a change in the wearing state according to the present embodiment may be a fixed value set in advance or a variable value which can be appropriately set by a user manipulation and the like.

Then, when it is determined that the wearing slippage frequently occurs, the information processing apparatus according to the present embodiment displays images, characters and the like on the display screen corresponding to the device that can be used while being worn on a user's head using a display method in which the user does not care even when display positions of images, characters and the like deviate from the object, instead of a display method that exactly superimposes the images, characters and the like on the object. Here, examples of display according to the display method that will not distract the user even when the display positions of images, characters and the like deviate from the object according to the present embodiment include displaying the images and characters by performing slight position alignment on the upper part of the object or the like, and displaying the images and characters at the edge of the display screen without associating with the position of the object.

When the control processing according to the third example is performed, for example, it is possible to realize display corresponding to a situation in which wearing slippage frequently occurs (e.g., display using a display method by which it is more difficult for the user to recognize a deviation between the environment and the display screen corresponding to the device that can be used while being worn on a user's head in such a situation, and the like). Accordingly, it is possible to improve user convenience by performing the control processing according to the third example.

(2-4) Fourth example of control processing

The information processing apparatus according to the present embodiment causes the processing related to detection of the user's gaze corresponding to the wearing state of the device that can be used while being worn on a user's head, which has been determined in the processing (determination processing) of (1), to be performed.

For example, the corneal reflection method includes a "3-dimensional model utilization method" using a three-dimensional model of the eye, as shown in FIG. 1, and a "2D mapping method." Here, when the "3-dimensional model utilization method" is compared with the "2D mapping method," the "3-dimensional model utilization method" can estimate a gaze more accurately in a case in which wearing slippage occurs. Also, comparing "3-dimensional model utilization method" and the "2D mapping method," the "2D mapping method" has a smaller processing load.

Accordingly, the information processing apparatus according to the present embodiment causes the processing related to detection of the user's gaze corresponding to the wearing state to be performed through switching between processing related to detection of the user's gaze using the "3-dimensional model utilization method" and processing related to detection of the user's gaze using the "2D mapping method," depending on the determined wearing state. For example, the information processing apparatus according to the present embodiment causes the processing related to detection of the user's gaze using the "2D mapping method" to be performed when wearing slippage does not occur and causes the processing related to detection of the user's gaze using the "3-dimensional model utilization method" to be performed when wearing slippage occurs.

It is possible to reduce a processing load on the processing related to detection of the user's gaze and to improve the accuracy of detection of the gaze by performing the control processing according to the fourth example, for example.

(2-5) Fifth example of control processing

The information processing apparatus according to the present embodiment may perform processing which is a combination of two or more of the control processing according to the first example described in (2-1) mentioned above to the control processing according to the fourth example described in (2-4) mentioned above.

The information processing apparatus according to the present embodiment causes the processing corresponding to the wearing state of the device that can be used while being worn on a user's head to be performed by performing the control processing according to the first example described in (2-1) mentioned above to the control processing according to the fifth example described in (2-5) mentioned above.

For example, the information processing apparatus according to the present embodiment performs the processing (determination processing) of (1) mentioned above and the processing (control processing) of (2) mentioned above, for example, as the processing related to the information processing method according to the present embodiment.

Note that the processing related to the information processing method according to the present embodiment is not limited to the processing (determination processing) of (1) mentioned above and the processing (control processing) of (2) mentioned above.

For example, the information processing apparatus according to the present embodiment may further perform the processing of estimating (estimation processing) the optical axis vector and the eyeball-center position, as described above.

When the information processing apparatus according to the present embodiment further performs the estimation processing, for example, the information processing apparatus according to the present embodiment determines the wearing state of the device that can be used while being worn on a user's head in the processing (determination processing) of (1) mentioned above on the basis of the distance between the optical axis vector and the eyeball-center position which have been estimated in the estimation processing. Even when the information processing apparatus according to the present embodiment further performs the estimation processing, the information processing apparatus according to the present embodiment, of course, can perform the processing (determination processing) of (1) mentioned above using one or both of the optical axis vector and the eyeball-center position estimated by an external device.

Note that "the processing (determination processing) of (1) mentioned above and the processing (control processing) of (2) mentioned above" and "the processing (determination processing) of (1) mentioned above, the processing (control processing) of (2) mentioned above and the estimation processing" are obtained by dividing the processing related to the information processing method according to the present embodiment for the sake of convenience. Accordingly, the processing related to the information processing method according to the present embodiment may regard "the processing (determination processing) of (1) mentioned above and the processing (control processing) of (2) mentioned above" and "the processing (determination processing) of (1) mentioned above, the processing (control processing) of (2) mentioned above and the estimation processing" as a single process, for example. Also, the processing related to the information processing method according to the present embodiment may regard "the processing (determination processing) of (1) mentioned above and the processing (control processing) of (2) mentioned above" and "the processing (determination processing) of (1) mentioned above, the processing (control processing) of (2) mentioned above and the estimation processing" as two or more processes (according to any separating method), for example.

(Information processing apparatus according to the present embodiment)

Next, an example of the configuration of the information processing apparatus according to the present embodiment that can perform the processing according to the information processing method according to the present embodiment described above is described.

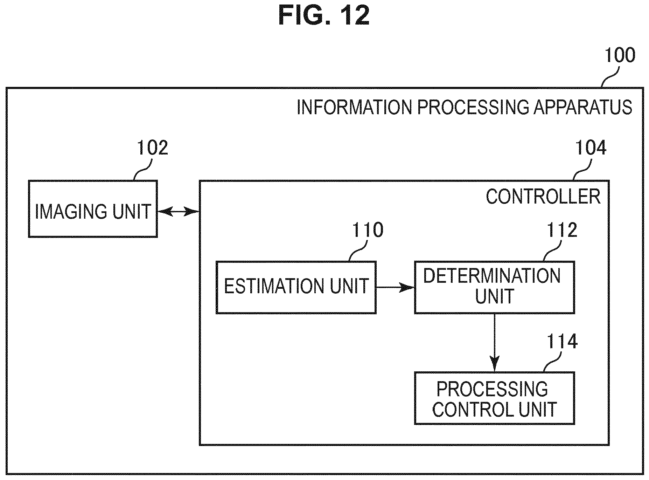

FIG. 12 is a block diagram showing an example of the configuration of an information processing apparatus 100 according to the present embodiment. The information processing apparatus 100 includes an imaging unit 102 and a controller 104, for example.

In addition, the information processing apparatus 100 may include a read-only memory (ROM, not illustrated), a random access memory (RAM, not illustrated), a storage unit (not illustrated), a communication unit for performing communication with an external device wirelessly or via wire (not illustrated), an operation unit that the user can operate (not illustrated), a display unit that displays various screens on a display screen (not illustrated), etc., for example. The information processing apparatus 100 connects the components mentioned above by means of a bus as a data transfer path, for example.

The ROM (not illustrated) stores control data such as a program and operation parameters used by the controller 104. The RAM (not illustrated) temporarily stores a program and the like executed by the controller 104.

The storage unit (not illustrated) is a storage means included in the information processing apparatus 100, and stores various data such as data used for the processing related to the detection of the gaze such as information concerning the eye, image data showing captured images, and applications, for example. In the storage unit (not illustrated), information concerning the eye such as the radius of the cornea, the distance between the eyeball-center and the cornea-center, and the distance between the cornea-center and the pupil-center is stored for each user, for example. Further, in the storage unit (not illustrated), dictionary data for the detection of a corneal reflection image and the pupil may be stored, for example.

Here, a magnetic recording medium such as a hard disk and a nonvolatile memory such as a flash memory may be presented as examples of the storgae unit (not illustrated). The storage unit (not illustrated) may be attachable to/detachable from the information processing apparatus 100.

Examples of the communication unit (not illustrated) include a communication interface described later. Examples of the operation unit (not illustrated) include an operation input device described later, and examples of the display unit (not illustrated) include a display device described later.

[Example of hardware configuration of information processing apparatus 100]

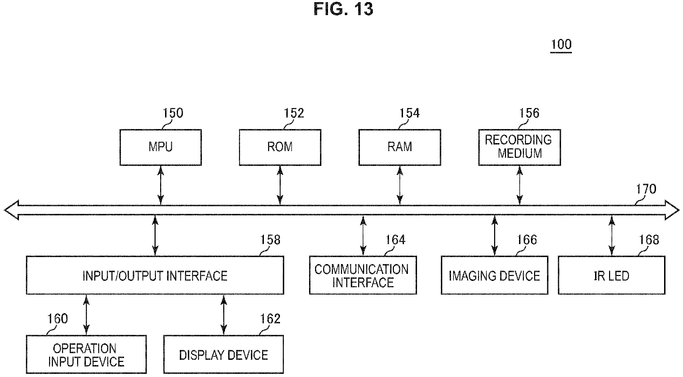

FIG. 13 is an explanatory diagram of an example of the hardware configuration of the information processing apparatus 100 according to the present embodiment. For example, the information processing apparatus 100 includes an MPU 150, a ROM 152, a RAM 154, a recording medium 156, an input/output interface 158, an operation input device 160, a display device 162, a communication interface 164, an imaging device 166 and a IR LED 168. In addition, the information processing apparatus 100, for example, connects the respective components using a bus 170 serving as a data transfer path.

The MPU 150 functions as, for example, one or two or more processors configured of an arithmetic circuit such as a micro-processing unit (MPU), and the controller 104 that is configured of various processing circuits etc. and controls the entire information processing apparatus 100. Also, the MPU 150 serves as an estimation unit 110, a determination unit 112 and a processing control unit 114, which will be described below, in the information processing apparatus 100.

The ROM 152 stores control data such as a program and operation parameters used by the MPU 150. The RAM 154 temporarily stores, for example, a program and the like executed by the MPU 150.

The recording medium 156 functions as a storage unit (not shown) and stores various types of data, for example, data used for the processing related to detection of the user's gaze, such as information concerning the eye, image data indicating captured images, applications, and the like.

A magnetic recording medium such as a hard disk and a nonvolatile memory such as a flash memory may be presented as examples of the recording medium 156. The storage unit (not illustrated) may be attachable to/detachable from the information processing apparatus 100.

The input/output interface 158 is connected to, for example, the operation input device 160 and the display device 162. The operation input device 160 functions as the operation unit (not illustrated) and the display device 162 functions as the display unit (not illustrated). Here, a universal serial bus (USB) terminal, a digital visual interface (DVI) terminal, a High-Definition Multimedia Interface (HDMI) (registered trademark) terminal and various processing circuits may be presented as examples of the input/output interface 158.

The operation input device 160 is included in the information processing apparatus 100 and connected to the input/output interface 158 inside the information processing apparatus 100. For example, a button, direction keys, a rotary type selector such as a jog dial or a combination thereof may be presented as an example of the operation input device 160.

The display device 162 is included in the information processing apparatus 100 and connected to the input/output interface 158 in the information processing apparatus 100. For example, a liquid crystal display and an organic electro-luminescence display (or an organic light emitting diode (OLED) display) may be presented as examples of the display device 162.

Note that the input/output interface 158 may be connected to external devices of the information processing apparatus 100, such as the operation input device (e.g., keyboard and mouse), the display device and the imaging device. In addition, the display device 162 may be a display device that may be manipulated by the user, such as a touch device.

The communication interface 164 is a communication means included in the information processing apparatus 100 and serves as a communication unit (not illustrated) for performing wireless or wired communication with an external apparatus (or external device), such as an external imaging device, an external display device and an external device that can be used while being worn on a user's head according to the present embodiment, via a network (or directly). For example, a communication antenna and radio frequency (RF) circuit (wireless communication), an IEEE 802.15.1 port and transmission/reception circuit (wireless communication), an IEEE 802.11 port and transmission/reception circuit (wireless communication) or a local area network (LAN) terminal and transmission/reception circuit (wired communication) may be presented as examples of the communication interface 164. In addition, the communication unit (not illustrated) may have a configuration corresponding to arbitrary standards for communication, such as a Universal Serial Bus (USB) terminal and transmission/reception circuit, or a configuration for communicating with an external apparatus via a network.

For example, a network according to the present embodiment may be a wired network such as a LAN and a wide area network (WAN), a wireless network such as a wireless local area network (WLAN) and a wireless wide area network (WWAN) via a base station or the Internet using a communication protocol such as the transmission control protocol/Internet protocol (TCP/IP).

The imaging device 166 is an imaging means included in the information processing apparatus 100, and functions as the imaging unit 102 that generates an image (a captured image) by imaging. The imaging device 166 is configured of one or two or more imaging devices that image one eye of the user or both eyes of the user, for example. The imaging device 166 is provided in a position that allows an eye irradiated with the light from a light source such as an IR LED to be imaged, for example.

In the case where the imaging device 166 is provided in the information processing apparatus 100, processing according to the information processing method according to the present embodiment can be performed on the basis of a captured image generated by imaging in the imaging device 166, for example.

The imaging device 166 includes, for example, a lens/imaging element and a signal processing circuit. The lens/imaging element includes, for example, an optical lens and an image sensor using a plurality of imaging elements such as complementary oxide semiconductors (CMOSs). The signal processing circuit includes, for example, an automatic gain control (AGC) circuit and an analog-to-digital converter (ADC), and converts an analog signal generated by the imaging element into a digital signal (image data). The signal processing circuit performs various processes related to, for example, a RAW processing. In addition, the signal processing circuit may perform various signal processes such as white balance adjustment, color tone correction, gamma correction, YCbCr conversion and edge emphasizing.

The IR LED 168 is a light source included in the information processing apparatus 100, and is composed of a plurality of IR LEDs. The IR LED 168 is provided in a position that allows light to be applied to the user's eye, for example. As described above, the light source included in the information processing apparatus 100 is not limited to an IR LED, as a matter of course.

The information processing apparatus 100 performs processing according to the information processing method according to the present embodiment using the configuration illustrated in FIG. 13. The hardware configuration of the information processing apparatus 100 according to the present embodiment is not limited to the configuration illustrated in FIG. 13.

For example, in the case of processing a captured image according to the present embodiment acquired from an external device that can be used while being worn on a user's head according to the present embodiment or the like, the information processing apparatus 100 may have a configuration in which one of the imaging device 166 and the IR LED 168 is not provided or neither of them is provided.

Further, in the case where the information processing apparatus 100 has a configuration in which processing is performed in a stand-alone manner, the information processing apparatus 100 may not include the communication interface 164, for example. Further, the information processing apparatus 100 may have a configuration not including the recording medium 156, the operation input device 160, and/or the display device 162.

An example of the configuration of the information processing apparatus 100 according to the present embodiment will now be described with reference to FIG. 12 again. The imaging unit 102 generates a captured image in which an eye irradiated with the light from a light source is imaged (a captured image of the present embodiment). Examples of the imaging unit 102 include the imaging device 166.

The controller 104 is composed of an MPU, for example, and serves to control the entire information processing apparatus 200. Also, the controller 104 includes the estimation unit 110, the determination unit 112 and the processing control unit 114, for example, and plays a leading role in the processing related to the information processing method according to the present embodiment. Here, FIG. 12 shows an example of a configuration in a case in which the controller 104 performs the processing (determination processing) of (1) mentioned above, the processing (control processing) of (2) mentioned above and the estimation processing as the processing related to the information processing method according to the present embodiment.

The estimation unit 110 plays a leading role in the estimation processing and estimates the optical axis vector and the eyeball-center position on the basis of the captured image. The estimation unit 110 estimates the optical axis vector by the processing described with reference to FIG. 1 and also estimates the eyeball-center position by the processing (estimation of the eyeball-center position) described in (a) mentioned above, for example.

The determination unit 112 plays a leading role in the processing (determination processing) of (1) mentioned above and determines the wearing state of the device that can be used while being worn on a user's head on the basis of the distance between the optical axis vector estimated at the first time point and the eyeball-center position estimated at the second time point before the first time point. For example, the determination unit 112 determines the wearing state according to threshold value processing using the distance between the optical axis vector and the eyeball-center position, and the set threshold value.

The processing control unit 114 plays a leading role in the processing (control processing) of (2) mentioned above and causes the processing corresponding to the determined wearing state of the device that can be used while being worn on a user's head to be performed. For example, the processing control unit 114 performs any one of the control processing according to the first example described in (2-1) mentioned above to the control processing according to the fifth example described in (2-5) mentioned above.

The controller 104 plays a leading role in the processing related to the information processing method according to the present embodiment by including the estimation unit 110, the determination unit 112 and the processing control unit 114, for example.

The information processing apparatus 100 performs the processing related to the information processing method according to the present embodiment (e.g., the processing (determination processing) of (1) mentioned above, the processing (control processing) of (2) mentioned above and the estimation processing), for example, in accordance with the configuration shown in FIG. 12.

Therefore, the information processing apparatus 100 can control processing on the basis of the wearing state of the device that can be used while being worn on a user's head, for example, in accordance with the configuration shown in FIG. 12.

Furthermore, by means of the configuration shown in FIG. 12, the information processing apparatus 100 can exhibit an effect that is brought out by processing according to the information processing method according to the present embodiment like that described above being performed, for example.

Note that the configuration of the information processing apparatus according to the present embodiment is not limited to the configuration shown in FIG. 12.

For example, the information processing apparatus according to the present embodiment may include one or more of the estimation unit 110, the determination unit 112 and the processing control unit 114 shown in FIG. 12 separately from the controller 104 (e.g., realize the one or more components as a separate processing circuit).

Further, when the estimation processing is performed in an external device and the processing (determination processing) of (1) mentioned above is performed using the optical axis vector and the eyeball-center position estimated in the external device, the information processing apparatus according to the present embodiment may not have the estimation unit 110.

Further, as described above, "the processing (determination processing) of (1) mentioned above and the processing (control processing) of (2) mentioned above" and "the processing (determination processing) of (1) mentioned above, the processing (control processing) of (2) mentioned above and the estimation processing" are obtained by dividing the processing related to the information processing method according to the present embodiment for the sake of convenience. Accordingly, the configuration for realizing the processing related to the information processing method according to the present embodiment is not limited to the estimation unit 110, the determination unit 112 and the processing control unit 114 shown in FIG. 12 and may employ a configuration according to a method of dividing the processing related to the information processing method according to the present embodiment.

Hereinabove, the present embodiment is described using an information processing apparatus, but the present embodiment is not limited to this form. The present embodiment may be used for various devices that can perform processing related to the information processing method according to the present embodiment, such as a device that can be used while being worn on a user's head such as an eyewear and an HMD, a computer such as a personal computer (PC) and a server, a communication device such as a mobile phone and a smartphone, and a tablet device. Further, the present embodiment may be used for one or two or more integrated circuits (IC) that can be incorporated into a device like the above, for example.

Further, the information processing apparatus according to the present embodiment may be used for a system that is composed of one or two or more devices and is designed to be connected to a network (or to perform communication between devices), such as for cloud computing. In other words, the information processing apparatus according to the present embodiment described above may be configured as an information processing system composed of a plurality of devices, for example.

(Program according to present embodiment)

A program for causing a computer to function as the information processing apparatus according to the present embodiment (e.g., a program that can execute the processing related to the information processing method according to the present embodiment, such as "the processing (determination processing) of (1) mentioned above and the processing (control processing) of (2) mentioned above" and "the processing (determination processing) of (1) mentioned above, the processing (control processing) of (2) mentioned above and the estimation processing" and the like) may be executed by a processor or the like in the computer and thus processing can be controlled on the basis of the wearing state of the device that can be used while being worn on a user's head.

Further, by a program for causing a computer to function as the information processing apparatus according to the present embodiment being executed by the processor, or the like, at the computer, it is possible to provide effects provided by the above-described processing relating to the information processing method according to the present embodiment being performed.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the above shows that a program (computer program) causing a computer to function as the information processing apparatus according to the present embodiment is provided, but the present embodiment can further provide a recording medium caused to store the program.

The above configuration shows an example of the present embodiment and naturally comes under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.

(1) An information processing apparatus including:

a determination unit that determines a wearing state of a device being used while being worn on a user's head on the basis of a distance between

an optical axis vector that corresponds to a user's gaze and is estimated on the basis of a captured image obtained by imaging an eye irradiated with light from a light source at a first time point, and
an eyeball-center position estimated on the basis of a plurality of the captured images in time series at a second time point before the first time point; and

a processing control unit that causes processing corresponding to the determined wearing state to be performed.

(2) The information processing apparatus according to (1), in which the processing control unit causes a display position on a display screen corresponding to the device being used while being worn on the user's head to be set to a display position corresponding to the optical axis vector in a case where a change in the wearing state is detected.
(3) The information processing apparatus according to (1) or (2), in which the processing control unit notifies that a change in the wearing state is detected.
(4) The information processing apparatus according to any one of (1) to (3), in which the processing control unit causes a way of displaying on a display screen corresponding to the device being used while being worn on the user's head to be changed depending on a frequency of detection of a change in the wearing state.
(5) The information processing apparatus according to any one of (1) to (4), in which the processing control unit causes processing related to detection of a user's gaze corresponding to the determined wearing state to be performed.
(6) The information processing apparatus according to any one of (1) to (5), further including:

an estimation unit that estimates the optical axis vector and the eyeball-center position,
in which the determination unit determines the wearing state on the basis of the distance between the optical axis vector and the eyeball-center position estimated in the estimation unit.

(7) An information processing method including:

determining a wearing state of a device being used while being worn on a user's head on the basis of a distance between

an optical axis vector that corresponds to a user's gaze and is estimated on the basis of a captured image obtained by imaging an eye irradiated with light from a light source at a first time point, and
an eyeball-center position estimated on the basis of a plurality of the captured images in time series at a second time point before the first time point; and

causing processing corresponding to the determined wearing state to be performed.

(8) A program for causing a computer to execute:

determining a wearing state of a device being used while being worn on a user's head on the basis of a distance between

an optical axis vector that corresponds to a user's gaze and is estimated on the basis of a captured image obtained by imaging an eye irradiated with light from a light source at a first time point, and
an eyeball-center position estimated on the basis of a plurality of the captured images in time-series at a second time point before the first time point; and

causing processing corresponding to the determined wearing state to be performed.

Reference Signs List

100   information processing apparatus
102   imaging unit
104   controller
110   estimation unit

112 determination unit
114 processing control unit

**Claims**

1. An information processing apparatus comprising:

   a determination unit that determines a wearing state of a device being used while being worn on a user's head on the basis of a distance between
   an optical axis vector that corresponds to a user's gaze and is estimated on the basis of a captured image obtained by imaging an eye irradiated with light from a light source at a first time point, and
   an eyeball-center position estimated on the basis of a plurality of the captured images in time series at a second time point before the first time point; and
   a processing control unit that causes processing corresponding to the determined wearing state to be performed.

2. The information processing apparatus according to claim 1, wherein the processing control unit causes a display position on a display screen corresponding to the device being used while being worn on the user's head to be set to a display position corresponding to the optical axis vector in a case where a change in the wearing state is detected.

3. The information processing apparatus according to claim 1, wherein the processing control unit notifies that a change in the wearing state is detected.

4. The information processing apparatus according to claim 1, wherein the processing control unit causes a way of displaying on a display screen corresponding to the device being used while being worn on the user's head to be changed depending on a frequency of detection of a change in the wearing state.

5. The information processing apparatus according to claim 1, wherein the processing control unit causes processing related to detection of a user's gaze corresponding to the determined wearing state to be performed.

6. The information processing apparatus according to claim 1, further comprising:

   an estimation unit that estimates the optical axis vector and the eyeball-center position,
   wherein the determination unit determines the wearing state on the basis of the distance between the optical axis vector and the eyeball-center position estimated in the estimation unit.

7. An information processing method comprising:

   determining a wearing state of a device being used while being worn on a user's head on the basis of a distance between

   an optical axis vector that corresponds to a user's gaze and is estimated on the basis of a captured image obtained by imaging an eye irradiated with light from a light source at a first time point, and
   an eyeball-center position estimated on the basis of a plurality of the captured images in time series at a second time point before the first time point; and

   causing processing corresponding to the determined wearing state to be performed.

8. A program for causing a computer to execute:

   determining a wearing state of a device being used while being worn on a user's head on the basis of a distance between

   an optical axis vector that corresponds to a user's gaze and is estimated on the basis of a captured image obtained by imaging an eye irradiated with light from a light source at a first time point, and
   an eyeball-center position estimated on the basis of a plurality of the captured images in time-series at a second time point before the first time point; and

causing processing corresponding to the determined wearing state to be performed.

# FIG. 1

A

PUPIL    CORNEA    EYEBALL

BRIGHT    OUTLIER OF
SPOT    GLARE, ETC.

B

C

D

E    CORNEA-
CENTER

F

PUPIL-CENTER SEEN ON
SURFACE OF CORNEA

ACTUAL PUPIL-
CENTER

L
r

CAMERA

G

OPTICAL
AXIS
VECTOR

H

GAZE VECTOR

OFFSET

# FIG. 2

PUPIL-CENTER

CORNEA-CENTER

OPTICAL AXIS VECTOR

M

EYEBALL-CENTER

# FIG. 3

CORNEA-CENTER IN i FRAME

$\vec{d}$

OPTICAL AXIS VECTOR
IN i FRAME

EYEBALL-CENTER

$\vec{c}$

$\vec{p}$

O CAMERA-CENTER

**FIG. 4**

CORNEA

PUPIL   EYEBALL

PUPIL-CENTER SEEN ON
SURFACE OF CORNEA
(REFRACTION)

PUPIL-CENTER
(APPROXIMATE VALUE)

CAMERA

L+M

r+M

EYEBALL-
CENTER

A

BRIGHT SPOT   OUTLIER OF
GLARE, ETC.

M: DISTANCE BETWEEN EYEBALL-CENTER
AND CORNEA-CENTER

**FIG. 5**

PUPIL-CENTER
(APPROXIMATE VALUE)

PUPIL-CENTER SEEN
ON SURFACE OF
CORNEA
(REFRACTION)

CORNEA-CENTER
(APPROXIMATE
VALUE)

CORNEA
PUPIL    EYEBALL

$L+M$

$r+M$

CAMERA

EYEBALL-
CENTER

BRIGHT SPOT    OUTLIER OF
GLARE, ETC.

M: DISTANCE BETWEEN EYEBALL-CENTER
AND CORNEA-CENTER

**FIG. 6**

# FIG. 7

# FIG. 8

A

EYEBALL-
CENTER
PUPIL          CORNEA          EYEBALL

⊚ POSITION OF
  BRIGHT SPOT
  CANDIDATE

BRIGHT    OUTLIER OF GLARE, ETC.
SPOT

BRIGHT SPOT CANDIDATE DETECTED BY
IMAGE RECOGNITION

B

EYEBALL-
CENTER
PUPIL          CORNEA          EYEBALL

BRIGHT          OUTLIER OF
SPOT            GLARE, ETC.

28

# FIG. 9

→ t

|| t | t+1 | t+2 |
|---|---|---|---|

**t**

DETECTION OF PUPIL
▼
DETECTION OF BRIGHT SPOT
▼
ESTIMATION OF CORNEA-CENTER
▼
ESTIMATION OF PUPIL-CENTER
▼
ESTIMATION OF EYE AXIS VECTOR
▼
ESTIMATION OF EYEBALL-CENTER

**t+1**

DETECTION OF PUPIL
▼
DETECTION OF BRIGHT SPOT
▼
APPROXIMATION OF PUPIL-CENTER
▼
APPROXIMATION OF CORNEA-CENTER
▼
APPROXIMATION OF POSITION OF BRIGHT SPOT
▼
ESTIMATION OF CORNEA-CENTER
▼
ESTIMATION OF PUPIL-CENTER
▼
ESTIMATION OF EYE AXIS VECTOR
▼
DETECTION OF WEARING SLIPPAGE
▼
UPDATE OF EYEBALL-CENTER

**t+2**

DETECTION OF PUPIL
▼
DETECTION OF BRIGHT SPOT
▼
APPROXIMATION OF PUPIL-CENTER
▼
APPROXIMATION OF CORNEA-CENTER
▼
APPROXIMATION OF POSITION OF BRIGHT SPOT
▼
ESTIMATION OF CORNEA-CENTER
▼
ESTIMATION OF PUPIL-CENTER
▼
ESTIMATION OF EYE AXIS VECTOR
▼
DETECTION OF WEARING SLIPPAGE
▼
UPDATE OF EYEBALL-CENTER

## FIG. 10

FIG. 11

A

CORNEA-
CENTER          GAZE
                VECTOR
EYEBALL-    PUPIL-
CENTER      CENTER

~EYE GLASSES

OPMITAL
FIELD OF VISION

~DISPLAY AREA

~DISPLAYABLE AREA

CAMERA

B

CORNEA-
CENTER          GAZE
                VECTOR
EYEBALL-    PUPIL-
CENTER      CENTER

CASE WHERE
EYE-GLASSES
MOVE DOWNWARD

~EYE GLASSES

OPMITAL FIELD OF
VISION

DEVIATE UPWARD
FROM
EYE-GLASSES

DISPLAY
AREA

DISPLAYABLE AREA

CAMERA

~WEARING
SLIPPAGE

# FIG. 12

**FIG. 13**

## INTERNATIONAL SEARCH REPORT

| | International application No. |
|---|---|
| | PCT/JP2015/081260 |

**A. CLASSIFICATION OF SUBJECT MATTER**

*H04N5/64*(2006.01)i, *G02B27/02*(2006.01)i, *G06F3/01*(2006.01)i, *G09G5/00* (2006.01)i

According to International Patent Classification (IPC) or to both national classification and IPC

**B. FIELDS SEARCHED**

Minimum documentation searched (classification system followed by classification symbols)
H04N5/64, G02B27/02, G06F3/01, G09G5/00

Documentation searched other than minimum documentation to the extent that such documents are included in the fields searched

| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Shin'ichi HIKITA, Yasuo YAMADA, Takeshi KASAI, Takashi TAKEDA, Yasuhide KOBAYASHI, Mitsuyuki SAITO, "A Method for Eye-Tracking Based on Estimation of the Eye Rotation Center with Two Light Images Reflected on the Cornea" The Transactions of the Institute of Electronics, Information and Communication Engineers D (Information and Systems), vol.J96-D, no.1, The Institute of Electronics, Information and Communication Engineers, 01 January 2013 (01.01.2013), pages 250 to 257, ISSN 1880-4535 | 1-8 |
| A | JP 2010-112979 A (Advanced Telecommunications Research Institute International), 20 May 2010 (20.05.2010), paragraphs [0076] to [0111]; fig. 13 to 17 (Family: none) | 1-8 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 January 2016 (26.01.16) | 09 February 2016 (09.02.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2015/081260

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-300730 A  (Nikon Corp.),<br>27 October 2005 (27.10.2005),<br>paragraphs [0002] to [0003], [0014] to [0016];<br>fig. 4 to 5<br>(Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011249906 A